# EUROPÄISCHE PATENTANMELDUNG

(11) **EP 4 094 919 A1**
(43) Veröffentlichungstag der Anmeldung: **30.11.2022**
(21) Anmeldenummer: 21176699.3
(22) Anmeldetag: 28.05.2021
(51) Int. Cl.: B29C 45/20

(54) **MEHRTEILIGE MASCHINEN-DÜSE**

(71) Anmelder: Schulze, Ebru, 78056 Villingen-Schwenningen (DE)
(72) Erfinder: SCHULZE, Torsten, 78056 Villingen-Schwenningen (DE); SCHULZE, Matthias, 78056 Villingen-Schwenningen (DE); RUNGE, Armin, 78052 Villingen-Schwenningen (DE)
(74) Vertreter: Patentanwälte Bauer Vorberg Kayser

(57) **Zusammenfassung**

Beschrieben ist eine Maschinen-Düse für eine Spritzguss-Vorrichtung, wobei die Maschinen-Düse dazu eingerichtet ist, ein Spritzguss-Medium von der Spritzguss-Vorrichtung in ein Spritzguss-Werkzeug zu leiten und welche dadurch gekennzeichnet, dass die Maschinen-Düse mehrteilig ausgeführt ist und einen Einsatz sowie eine Hülse umfasst, wobei der Einsatz das Spritzguss-Medium leitet, während die Hülse den Einsatz an der Spritzguss-Vorrichtung fixiert.

## Beschreibung

Die vorliegende Erfindung betrifft eine Maschinen-Düse für eine Spritzguss-Vorrichtung in einer mehrteiligen Ausführung.

Maschinen-Düsen für Spritzguss-Vorrichtungen sind aus dem Stand der Technik bekannt und werden zur Zuführung von Spritzguss-Material in ein Werkzeug verwendet. Eine typische Spritzguss-Vorrichtung besteht grundsätzlich aus einer Zuführung für das Spritzguss-Rohmaterial, einer Plastifiziereinheit meist in Kombination mit einer Fördereinheit und einem Spritzguss-Werkzeug. In der Plastifiziereinheit wird das Spritzguss-Rohmaterial aufgeschmolzen und durch Fördereinrichtungen in Richtung des Spritzguss-Werkzeuges gefördert. Die Maschinen-Düse stellt dabei eine kraftschlüssige Verbindung zwischen einem Massezylinder der Spritzguss-Vorrichtung und dem Spritzguss-Werkzeug her, leitet also das Spritzguss-Medium von der Plastifizier- und Fördereinheit in das Werkzeug ein. Dabei erfährt die Maschinen-Düse beträchtliche Kräfte zum einen durch das Anpressen an das Spritzguss-Werkzeug und zum anderen durch den Förderdruck des Spritzguss-Mediums. Darüber hinaus wird die Maschinen-Düse abrasiv durch auftretende Scherkräfte des Spritzguss-Mediums, insbesondere bei faserverstärkten Spritzguss-Medien beansprucht.

Durch die immer höher werdenden Ansprüche an die durch Spritzguss-Vorrichtungen gefertigten Bauteile, werden dem Spritzguss-Medium häufig Zusätze beigemischt, die die Eigenschaften der Bauteile optimieren. Zusätze, wie zum Beispiel Fasern führen häufig zu einer noch größeren Belastung der Komponenten einschließlich der Maschinen-Düse.

In der DE202006007721 ist eine Maschinen-Düse gezeigt, welche an einer der hochbelasteten Stellen der Maschinen-Düse aus einem mechanisch stabileren Material gefertigt ist, während der größte Teil der Düse aus einer Kupferlegierung besteht. Dies reduziert den Verschleiß an den hochbelasteten Stellen der Maschinen-Düse und führt so zu einer längeren Lebensdauer. Ein Verfahren zur Herstellung solcher Maschinen-Düsen, insbesondere der Verbindung von Stahl mit Kupferlegierungen ist aus der DE102004022304 bekannt. Hier wird die Verbindung thermisch mittels eines Elektronenstrahls geschaffen. Die Fertigung solcher Düsen ist daher kostenintensiv und nicht trivial.

Eine weitere Möglichkeit zur Gestaltung der Maschinen-Düsen ist in der CN201510902089 und der CN106626239 gezeigt. Hier ist die Spitze der Maschinen-Düse, welche einen der hochbelasteten Bereiche darstellt, als eigenständiges Bauteil realisiert, wodurch bei Verschleiß der Spitze lediglich diese und nicht die gesamte Maschinen-Düse ausgetauscht werden kann.

Das Problem bei den genannten Maschinen-Düsen ist, dass die verwendeten Materialien meist sehr teuer im Vergleich zu herkömmlichen Stahl-Sorten sind und deren Bearbeitung und/oder deren Herstellung aufwendiger und dadurch ebenfalls kostenintensiver ist. Dies fällt besonders ins Gewicht, wenn Maschinen-Düsen mit einem großen Materialvolumen und gleichzeitig aufwendigen Außenkonturen, wie zum Beispiel verschiedenen Gewinden, Passungen, Sechskantflächen etc. gefertigt werden müssen. Es besteht daher ein Bedarf an einfach zu fertigenden und damit kostengünstigen Maschinen-Düsen.

Somit ist es die Aufgabe der vorliegenden Erfindung, eine kostengünstige und gleichzeitig widerstandsfähige Maschinen-Düse bereit zu stellen, die die Probleme der aus dem Stand der Technik bekannten Maschinen-Düsen nicht aufweist.

Diese Aufgabe wird durch eine Maschinen-Düse mit den Merkmalen des Patentanspruchs 1 und einer Spritzguss-Vorrichtung nach Patentanspruchs 15 gelöst.

Vorteilhafte Weiterbildungen sind Gegenstand abhängiger Patentansprüche.

Eine erfindungsgemäße Maschinen-Düse für eine Spritzguss-Vorrichtung, die dazu eingerichtet ist, ein Spritzguss-Medium von der Spritzguss-Vorrichtung in ein Spritzguss-Werkzeug zu leiten, zeichnet sich dadurch aus, dass die Maschinen-Düse mehrteilig ausgeführt ist und einen Einsatz sowie eine Hülse umfasst, wobei der Einsatz das Spritzguss-Medium leitet, während die Hülse den Einsatz an der Spritzguss-Vorrichtung fixiert.

Die Maschinen-Düse besteht dabei mindestens aus zwei Bauteilen. Das ist zum einen der Einsatz, welcher das Spritzguss-Medium von der Spritzguss-Vorrichtung zum Spritzguss-Werkzeug leitet und so im direkten Kontakt mit dem Spritzguss-Medium steht. Zum anderen besteht die Maschinen-Düse aus einer Hülse, welche den Einsatz an der Spritzguss-Vorrichtung fixiert und insbesondere nur dort Kontakt zum Spritzguss-Medium besitzt, wo keine besonders hohen Belastungen des Hülsen-Materials erwartet werden. Die Fixierung der Hülse an der Spritzguss-Vorrichtung kann an einem Massezylinder der Spritzgussvorrichtung realisiert werden. Durch diese Aufteilung kann die Hülse mit ihrer komplexeren Geometrie - aufgrund der Aufgabe der Befestigung an der Spritzguss-Vorrichtung - aus einem kostengünstigen und gut zu bearbeitenden Werkstoff hergestellt werden, während nur der Einsatz aus einem teureren Material gefertigt werden muss, welches auf die Anforderungen, die sich durch den direkten Kontakt mit dem Spritzguss-Medium an den hochbelasteten Stellen ergeben, angepasst ist. Auf diese Weise muss nicht die gesamte Maschinen-Düse aus dem teureren Material hergestellt werden, während der komplexere Herstellungsprozess auf das einfacher zu bearbeitende Material verlagert wird. Die Hülse und der Einsatz sind also zwei unabhängig voneinander handhabbare Bauteile und werden nach der Fertigung beispielsweise nur ineinandergesteckt. Das birgt den Vorteil, dass unterschiedliche Fertigungsprozesse für Hülse und Einsatz verwendet werden können. So kann für die Hülse möglicherweise die Herstellung als Gussteil optimal sein, und der Einsatz als Drehteil mit höherer Präzision gefertigt werden.

Ein weiterer Vorteil ergibt sich daraus, dass an der Hülse kaum Verschleiß zu erwarten ist, und diese dadurch eine gegenüber dem Einsatz höhere Lebensdauer erreicht. So kann die Hülse wiederverwendet werden und lediglich der Einsatz bei Bedarf ausgetauscht werden.

Auch eine Verwendung verschiedener Einsätze mit nur einer Hülse bietet sich an, da so die verschiedenen Einsätze beispielsweise durch ihre Geometrie oder dem verwendeten Material auf verschiedene Spritzguss-Medien angepasst sein können und nicht für jeden Einsatz auch eine Hülse vorgehalten werden muss. Daher ist der Einsatz vorzugsweise austauschbar ausgeführt, weiter vorzugsweise ist der Einsatz werkzeuglos austauschbar ausgeführt.

Eine besonders vorteilhafte Ausführungsform der Maschinen-Düse kann dadurch erreicht werden, dass der Einsatz so eingerichtet ist, dass im Bereich der Maschinen-Düse nur der Einsatz Kontakt zum Spritzguss-Medium erfährt. Auf diese Weise wird ein materialbelastender Kontakt zum Spritzguss-Medium mit der Hülse vollständig verhindert und der Verschleiß der Hülse vermindert. Die Hülse kann so aus einem kostengünstigen Material hergestellt werden, welches lediglich auf die Aufgabe des Fixierens des Einsatzes optimiert ist. Hier bieten sich herkömmliche Stähle, Warmarbeitsstähle, Einsatzstähle oder der gleichen an. Der Einsatz der Maschinen-Düse hingegen besitzt allein den direkten Kontakt zum Spritzguss-Medium und muss aus einem den Belastungen entsprechenden Material hergestellt werden. Durch diese Aufteilung der Aufgaben kann eine Kostenoptimierung erzielt werden, so dass die gesamte Maschinen-Düse kostengünstiger hergestellt werden kann und im Falle eines Ausfalls von nur einem Bauteil nicht die gesamte Maschinen-Düse ausgetauscht werden muss.

Eine weitere bevorzugte Ausführungsvariante der Maschinen-Düse ist dadurch gekennzeichnet, dass die Hülse den Einsatz durch eine lösbare Verbindung an der Spritzguss-Vorrichtung fixiert. Sofern eine lösbare Verbindung der Hülse mit der Spritzguss-Vorrichtung gewählt wird, erleichtert dies den Austausch einzelner Komponenten der Maschinen-Düse, was wiederum Folgekosten minimiert.

Vorzugsweise kann die lösbare Verbindung als Schraubverbindung ausgebildet sein. Dies ist eine im Maschinen- und Anlagenbau weitverbreitete Lösung, welche sich durch die Wiederverwendbarkeit und gleichzeitig die wiederholgenaue Befestigung der Maschinen-Düse auszeichnet. Die Schraubverbindung kann dabei durch ein auf einen äußeren Durchmesser der Hülse aufgebrachtes Gewinde mit entsprechendem Gegenstück in der Spritzguss-Vorrichtung realisiert werden, oder auch durch zusätzliche Schraubelemente nach Art eines Flansches mit Bohrungen und zugehörigen Schraubelementen erreicht werden. Das entsprechende Gegenstück kann dabei im Massezylinder der Spritzgussvorrichtung vorgesehen werden.

Weitere mögliche lösbare Verbindungen können dem breiten Feld des Maschinenbaus entnommen werden und umfassen zum Beispiel Keilverbindungen, Klemmverbindungen, lösbare Presspassungen, Klebeverbindungen und dergleichen. So kann die lösbare Verbindung an die Standards verschiedener Spritzgussmaschinen-Hersteller angepasst sein und passend zu deren Maschinen-Düsen-Schnittstellen ausgeführt sein.

Denkbar ist aber auch entgegen den vorangegangenen Ausführungen eine nicht lösbare Verbindung zum Beispiel in Form einer stoffschlüssigen Verbindung, wie dem Schweißen, deren Einsatz je nach Anwendungsfall durchaus sinnvoll sein kann.

Gemäß einer bevorzugten Ausführungsvariante der Maschinen-Düse ist diese dadurch gekennzeichnet, dass die Maschinen-Düse beheizbar ausgeführt ist. Das Spritzguss-Medium soll mit einer bestimmten Temperatur das Spritzguss-Werkzeug erreichen, um einen möglichst optimalen Spritzguss-Prozess zu gewährleisten. Dabei kann es von Vorteil sein, wenn das Spritzguss-Medium beim Durchqueren der Maschinen-Düse auf einer bestimmten Temperatur gehalten wird und nicht durch einen Wärmeverlust in der Maschinen-Düse abgekühlt wird.

Ein weiterer Vorteil ergibt sich durch die Beheizbarkeit der Maschinen-Düse dadurch, dass im Falle eines Verstopfens oder Verklebens der Maschinen-Düse durch das Spritzguss-Medium diese erhitzt werden kann, möglicherweise auch über die Soll-Temperatur des Spritzguss-Mediums hinaus, um so die Verstopfung der Maschinen-Düse zu lösen und einen Stillstand der Spritzguss-Vorrichtung möglichst kurz zu halten oder gar zu vermeiden.

Vorzugsweise ist die Maschinen-Düse nicht nur beheizbar, sondern ebenfalls abkühlbar ausgeführt. Je nach verwendetem Spritzguss-Material kann so noch genauer die Solltemperatur innerhalb der Maschinen-Düse eingehalten werden, wenn sich aufgrund verschiedener Effekte wie zum Beispiel durch Scherkräfte oder durch Kompression die Temperatur zu stark erhöht. Auch kann durch ein gezieltes Abkühlen möglicherweise eine Verstopfung der Maschinen-Düse schnell gelöst werden.

Die Beheizbarkeit kann durch verschiedene Elemente in verschiedenen Bauteilen der Maschinen-Düse realisiert werden. Es kann dabei von Vorteil sein, wenn entweder die Hülse beheizt wird oder das Heizelement als eigenständiges Bauteil der Maschinen-Düse ausgeführt ist, da so die Austauschbarkeit des Einsatzes gewährleistet bleibt. Das Heizelement als eigenständiges Bauteil kann dabei bspw. zwischen der Hülse und dem Einsatz, insbesondere in einer geeignet ausgestalteten Aussparung zwischen Hülse und Einsatz, angeordnet sein. Es kann zusätzlich oder alternativ auch vorteilhaft sein, wenn der Einsatz selbst beheizbar ist, da so die Wärme bzw. Kälte möglichst nah am Spritzguss-Medium eingebracht wird.

Typische Heizelemente können zum Beispiel Heizpatronen oder allgemein elektrische Heizwendeln sein. Eine Kühlkanalstruktur in einem der Maschinen-Düsen Bauteile in Verbindung mit einem extern auf Temperatur gebrachten Kühlfluid können ebenfalls von Vorteil sein. So kann beispielsweise relativ einfach auch eine Kühlung realisiert werden, wobei die Kühlflüssigkeit auch zum Heizen verwendet werden kann, wie es zum Beispiel auch bei Klimaanlagen der Fall ist. Weitere denkbare Heiz- bzw. Kühlelemente können auch Peltierelemente oder dergleichen sein.

Eine weitere vorteilhafte Ausführungsvariante zeichnet sich dadurch aus, dass der Einsatz wenigstens teilweise aus Material mit einer Wärmeleitfähigkeit von über 50 W/mK besteht. Eine hohe Wärmeleitfähigkeit des Einsatzes ist von Vorteil, da so die Wärme der Spritzguss-Vorrichtung bis in die Spitze der Maschinen-Düse geleitet werden kann und keine deutlich kälteren Stellen der Maschinen-Düse das Spritzguss-Medium abkühlen lassen. So wird verhindert, dass sich Kaltpfropfen in der Düse Bilden, die den Spritzgussprozess behindern oder verschlechtern oder die Maschinen-Düse sogar verstopfen. Da die Temperatur innerhalb der Maschinen-Düse homogener ist, kann mit einer insgesamt niedrigeren Temperatur als bei einer Stahl-Maschinen-Düse gearbeitet werden. Bei einer Stahl-Maschinen-Düse müsste mit einer höheren Temperatur gearbeitet werden, um zu vermeiden, dass die kälteste Stelle zu kalt wird und sich Kaltpfropfen bilden, da das Temperaturgefälle innerhalb der Stahl-Maschinen-Düse größer ist.

Vorzugsweise liegt die Wärmeleitfähigkeit des Materials für den Einsatz über 150 W/mK. Durch solch hohe Wärmeleitfähigkeiten kann ein zu starkes Abkühlen der Maschinen-Düse und dementsprechend des Spritzguss-Mediums erfolgreich verhindert werden. Ein Werkstoff mit solchen Eigenschaften ist zum Beispiel Hovadur K350. Der Einsatz ist daher vorzugsweise aus dem Material Hovadur K350. Je nach Anwendungsfall und gewählter Geometrie der Maschinen-Düse kann auch schon eine Wärmeleitfähigkeit von über 100 W/mK vorteilhaft sein. Jedenfalls sind im Allgemeinen Wärmeleitfähigkeiten von über 50 W/mK von Vorteil.

In Verbindung mit einer beheizbaren Maschinen-Düse bieten Materialien mit hohen Wärmeleitfähigkeiten den Vorteil, dass die eingebrachte Wäre gleichmäßiger in der Maschinendüse verteilt wird und so eine gleichmäßigere Temperatur in der Maschinen-Düse erzielt wird. Dies begünstigt den Spritzguss-Prozess.

Um den Einsatz verschleißärmer zu gestalten ist eine bevorzugte Ausführungsvariante derart gestaltet, dass der Einsatz wenigstens teilweise aus einer Legierung aus Wolfram-Kupfer oder Beryllium-Kupfer oder Chrom-Molybdän-Stahl besteht. Je nach verwendetem Spritzguss-Material bieten sich verschiedene Legierungen für den Einsatz an. So können bestimmte höher belastete Stellen des Einsatzes durch die oben genannten Materialien verstärkt werden, oder falls dies wirtschaftlich interessanter ist, der ganze Einsatz aus dem Material gefertigt werden. So zeichnet sich eine Wolfram-Kupfer Legierung Beispielsweise durch eine hohe Härte bei gleichzeitig guter Wärmeleitfähigkeit aus, eine Beryllium-Kupfer Legierung durch hohe chemische Widerstandsfähigkeit und gleichzeitig guter Wärmeleitfähigkeit und Chrom-Molybdän-Stahl durch allgemein gute mechanische Eigenschaften bei vergleichsweise niedrigem Preis.

Sofern ein Material für den Einsatz von Vorteil ist, bei welchem aus wirtschaftlichen Gründen nicht der Einsatz selbst daraus gefertigt werden kann, kann eine Ausführungsvariante der Maschinen-Düse bevorzugt werden, welche sich dadurch auszeichnet, dass der Einsatz eine Beschichtung aufweist. Durch die Beschichtung können bestimmte hochbelastete Bereiche des Einsatzes gezielt verstärkt werden. Zum Beispiel kann es sinnvoll sein nur die Flächen zu Beschichten, die mit dem Spritzguss-Medium in Kontakt kommen, in diesem Fall die Innenseite des Einsatzes. Zur besseren Lösbarkeit des Einsatzes von der Hülse beim Austausch des Einsatzes kann aber auch die Außenseite beschichtet werden. Es kann technisch oder wirtschaftlich sinnvoll sein, nicht zwischen bestimmten Flächen zu differenzieren, sondern den gesamten Einsatz zu beschichten.

Vorzugsweise bietet sich eine Beschichtung aus Titan-Zirkonium-Molybdän an. Diese zeichnet sich durch eine hohe Warmfestigkeit aus und bietet so einen höheren Widerstand der Oberflächen gegen Verschleiß bei höheren Temperaturen.

Eine weitere Ausführungsvariante der Maschinen-Düse ist dadurch gekennzeichnet, dass der Einsatz eine mehrstufige, im Wesentlichen zylindrische Form aufweist. Durch eine zylindrische Form des Einsatzes wird gewährleistet, dass sich der Einsatz in die Hülse einschieben lässt. Das Einschieben geschieht vorzugsweise in Fließrichtung des Spritzguss-Mediums, also entlang der Öffnung, durch welche das Spritzguss-Medium geleitet wird. Eine weitere zylindrische Stufe mit größerem Durchmesser kann vorgesehen sein, welche den Einsatz daran hindert, durch die Hülse hindurch zu rutschen. Diese Stufe kann auch gleichzeitig zum Befestigen und Verspannen des Einsatzes durch die Hülse mit der Spritzguss-Vorrichtung dienen. Vorzugsweise ist die Stufe am Anfang des Einsatzes positioniert, d.h. an der Stelle des Einsatzes, an dem das Spritzguss-Medium in den Einsatz eingeleitet wird. Gleichzeitig kann die Stufe auch eine abdichtende Funktion bezüglich des Spritzguss-Mediums übernehmen, da sie in direktem Kontakt mit der Spritzguss-Vorrichtung ist und dort das Austreten des Spritzguss-Mediums verhindert werden soll. Alternativ kann von einer zylindrischen Form auch in der Weise abgewichen werden, als dass die äußere Kontur auch leicht konisch ausgestaltet ist. Durch eine zueinander korrespondierende konische Ausgestaltung von Innenkontur der Hülse und Außenkontur des Einsatzes kann eine selbstzentrierende und selbstdichtende Anordnung geschaffen werden.

Die Geometrien des Einsatzes und dessen Stufen können generell auch stärker von einer zylindrischen Form abweichen. Beispielsweise können je nach Anwendungsfall Querschnitte in elliptischer Form, Polygonprofile, Zahnprofile oder dergleichen sinnvoll sein.

Zur Leitung des Spritzguss-Mediums weist der Einsatz eine Öffnung auf. In einer bevorzugten Ausführungsform der patentgemäßen Maschinen-Düse ist diese dadurch gekennzeichnet, dass der Einsatz zur Führung des Spritzguss-Mediums eine Öffnung aufweist, welche sich in Richtung einer Fließrichtung des Spritzguss-Mediums verjüngt. Durch die Verjüngung wird gewährleistet, dass das Spritzguss-Medium ausreichend gestaut wird, um ein homogenes Füllen des Werkzeuges zu gewährleisten.

Vorzugsweise ist die Öffnung nach der Verjüngung auf eine engste Stelle wieder erweitert. Der Kanal, der sich an die Aufnahmeöffnung der Angussbuchse des Spritzguss-Werkzeuges anschließt, wird in der Regel in Richtung des Inneren des Spritzguss-Werkezuges größer. Daher kann es von Vorteil sein, wenn die Öffnung des Einsatzes nach einer engsten Stelle wieder größer wird und sich zum Beispiel an den Öffnungswinkel des Kanals im Spritzguss-Werkzeug annähert. Der engsten Stelle kommt so eine Art Düsen- oder Drossel-Funktion zu. Auf diese Weise wird der Übergang in das Spritzguss-Werkzeug optimiert, wodurch verhindert werden kann, dass der Fluss des Spritzguss-Mediums abreißt und Fehlstellen im Spritzguss-Bauteil entstehen. Den Großteil der Öffnung des Einsatzes bildet nach wie vor der sich verjüngende Teil hin zur engsten Stelle. Die engste Stelle liegt in der Regel etwa im hinteren Teil des Einsatzes, wobei der hintere Teil durch den Bereich charakterisiert ist, an dem das Spritzguss-Medium wieder aus dem Einsatz austritt. Der hintere Teil des Einsatzes kann dabei zum Beispiel 5% der Gesamtlänge des Einsatzes entsprechen, kann aber auch 3% oder 1% entsprechen. In absoluten Zahlen ausgedrückt ist der hintere Teil des Einsatzes zum Beispiel 5 mm lang, kann aber auch 3 mm oder 1 mm entsprechen.

Zum besseren Anschluss der Maschinen-Düse an die Angussbuchse des Spritzgusswerkzeuges kann eine Ausführungsvariante der Maschinen-Düse dadurch gekennzeichnet sein, dass der Einsatz an der zum Spritzguss-Werkzeug gerichteten Fläche einen Anschlussradius aufweist, welcher 0,5 bis 1,0 mm kleiner ist als eine korrespondierende Angussbuchse des Spritzguss-Werkzeugs. Durch die unterschiedlichen Radien ergibt sich in Verbindung mit der Austrittsöffnung des Einsatzes ein Linienkontakt der Maschinen-Düse zum Spritzguss-Werkzeug, welcher sich bei hohem Anpressdruck der Maschinen-Düse an das Spritzguss-Werkzeug durch eine gute Dichtigkeit auszeichnet. So kann verhindert werden, dass ungewollt Spritzguss-Material an der Kontaktstelle austritt. Es kann von Vorteil sein, dass der Radienunterschied auf einen abweichenden Wert eingestellt wird, wichtig ist jedoch, dass der konvexe Radius kleiner als der konkave Radius ausgeführt ist.

Um eine gewisse Modularität der Maschinen-Bauteile zu schaffen, ist eine Ausführungsvariante der Maschinen-Düse dadurch gekennzeichnet, dass der Einsatz an seinem zum Spritzguss-Werkzeug gerichteten Ende standardisierte Düsenanschlussmaße nach Euromap-2 Standard aufweist. In der Euromap-2 Tabelle für Spritzguss-Vorrichtungen sind beispielsweise die Radien und Durchmesser der Angussbuchse als auch der Maschinen-Düse genormt. Darüber hinaus werden beispielsweise Lochmuster für die Verwendung von mehreren Maschinen-Düsen festgelegt, sowie die Kanalgeometrien vor und nach der Kontaktstelle. Die Kontaktbereiche von Maschinen-Düsen und Spritzguss-Werkzeugen können nach den in der Euromap-2 festgelegten Geometrien gefertigt werden. Auf diese Weise wird eine standardisierte Anschlussstelle bereitgestellt, die es ermöglicht die Maschinen-Düsen vielseitig und austauschbar einzusetzen.

Nach einer weiteren Ausführungsvariante der patentgemäßen Maschinen-Düse ist diese dadurch gekennzeichnet, dass der Einsatz so eingerichtet ist, dass der Einsatz an einer Angussbuchse des Spritzguss-Werkzeugs ausgerichtet wird. Die Öffnung, durch die das Spritzguss-Medium in das Spritzguss-Werkzeug eintreten muss, ist häufig sehr klein. Daher kann eine nicht optimale Ausrichtung der beiden Öffnungen zueinander zu einer deutlichen Verkleinerung des effektiven freien Querschnitts führen. Durch eine Ausrichtung des Einsatzes an der Angussbuchse wird dieses Problem vermieden. Die Ausrichtung kann zum Beispiel dadurch erreicht werden, dass die Angussbuchse und der Einsatz in ihrer Geometrie aufeinander abgestimmt werden. Wird der Einsatz beispielsweise konisch oder kugelig ausgeführt, kann sich dieser an einer entsprechenden Bohrung in der Angussbuchse ausrichten. Solche kugelig ausgeführten Maschinen-Düsen werden unter anderem Radius-Düsen genannt. Auch andere Lösungen über Führungen durch Passstifte oder dergleichen sind denkbar. Es kann auch vorgesehen sein eine Justierung des Versatzes der Öffnungen der Angussbuchse und der Maschinen-Düse mittels der Spritzguss-Vorrichtung vorzunehmen.

Zur Minimierung von Spiel zwischen Hülse und Einsatz ist eine Ausführungsvariante der Maschinen-Düse dadurch gekennzeichnet, dass wenigstens ein korrespondierendes Flächenpaar aus einer Außenfläche des Einsatzes und einer Innenseite der Hülse eine Passung zur Minimierung von Spiel bilden. Durch die Minimierung von Spiel zwischen Hülse und Einsatz kann sichergestellt werden, dass die Austrittsöffnung des Einsatzes reproduzierbar an der gleichen Stelle des Spritzguss-Werkzeuges angesetzt werden kann. Auch wird verhindert, dass zwischen Hülse und Einsatz Fremdkörper oder etwas des Spritzguss-Mediums eindringt und dadurch die Bauteile anschließend nur schwer wieder voneinander getrennt werden können.

Vorzugsweise ist das korrespondierende Flächenpaar konisch ausgeformt. Durch eine konische Ausformung kann mit geringem Aufwand in der Fertigung eine Spielfreiheit zwischen Hülse und Einsatz erzielt werden, was gleichzeitig ein Eindringen von Fremdkörpern ausschließt. Auch könnte auf einen zusätzlichen Anschlag am Einsatz verzichtet werden, da durch die konische Ausformung ein Durchrutschen des Einsatzes verhindert wird. Gleichzeitig zentriert sich der Einsatz in der Hülse, was zu einer exakten Ausrichtung zwischen Hülse und Einsatz führt.

Eine Herausforderung bei der Wiederverwendbarkeit der Hülse der Maschinen-Düse ist, dass das Material den Belastungen durch das Verspannen des Einsatzes mit der Spritzguss-Vorrichtung und den Anpresskräften auf Dauer standhält. Daher ist in einer Ausführungsvariante der patentgemäßen Maschinen-Düse diese dadurch gekennzeichnet, dass die Hülse wenigstens teilweise aus einem Stahl besteht. Besondere Anforderungen an eine chemische Beständigkeit werden aufgrund der Teilung von Hülse und Einsatz nicht an die Hülse gestellt. Daher bietet sich im Allgemeinen Stahl an, da er hohe Kräfte bei gleichzeitig niedrigen Materialkosten ertragen kann, während andere Eigenschaften wie die chemische Beständigkeit in den Hintergrund treten. Werkzeugstähle werden typischerweise für solche Aufgaben verwendet, vorzugsweise bietet sich aber gerade ein Warmarbeitsstahl an, wie zum Beispiel Stahl mit der Werkstoffnummer 1.2344 oder ähnliche. Diese bieten noch einmal verbesserte mechanische Eigenschaften bei höheren Temperaturen, welche je nach Spritzguss-Material an der Maschinen-Düse erreicht werden können.

Spritzguss-Vorrichtung mit einer Maschinen-Düse, wobei die Maschinen-Düse dazu eingerichtet ist, ein Spritzguss-Medium von der Spritzguss-Vorrichtung in ein Spritzguss-Werkzeug zu leiten, dadurch gekennzeichnet, dass
die Maschinen-Düse mehrteilig ausgeführt ist und einen Einsatz sowie eine Hülse umfasst, wobei der Einsatz das Spritzguss-Medium leitet, während die Hülse den Einsatz an der Spritzguss-Vorrichtung fixiert.

Die vorliegende Erfindung wird nachfolgend anhand von Ausführungsbeispielen unter Bezugnahme auf die beigefügten Figuren eingehend erläutert. Es zeigen:
- Figur 1: ein Ausführungsbeispiel eines patentgemäßen Einsatzes der Maschinen-Düse
- Figur 2: ein Ausführungsbeispiel einer patentgemäßen Hülse der Maschinen-Düse
- Figur 3: eine Schnittdarstellung des Ausführungsbeispiels eines patentgemäßen Einsatzes des Maschinen-Düse aus Fig. 1
- Figur 4: eine Schnittdarstellung des Ausführungsbeispiels einer patentgemäßen Hülse der Maschinen-Düse aus Fig. 2
- Figur 5: eine Schnittdarstellung der Maschinen-Düse in Kontakt mit der Angussbuchse des Spritzguss-Werkzeuges

In den Figuren bezeichnen - soweit nicht anders angegeben - gleiche Bezugszeichen gleiche oder einander entsprechende Komponenten mit gleicher Funktion.

Es sei an dieser Stelle angemerkt, dass die in den Figuren gewählten Darstellungen der Maschinen-Düsen schematische Darstellung sind, deren Geometrien vereinfacht sein können und so von den tatsächlichen Geometrien abweichen.

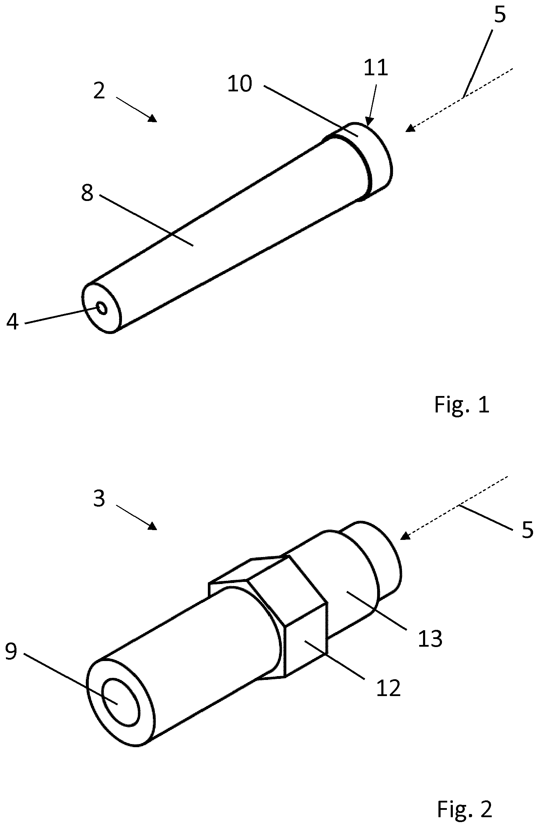

Figur 1 zeigt einen Einsatz 2 eines ersten Ausführungsbeispiels einer Maschinen-Düse in zweiteiliger Ausführung bestehend aus dem Einsatz 2 und einer vorliegend nicht gezeigten Hülse 3, die den Einsatz 2 in zusammengebautem Zustand, d.h. wenn die Maschinen-Düse an einer Spritzgussmaschine montiert ist, umgibt. Den Hauptteil einer Außenkontur des Einsatzes 2 bildet eine äußere Passfläche 8, welche zusammen mit einer inneren Passfläche 9 der Hülse 3 ein korrespondierendes Flächenpaar zur Ausrichtung des Einsatzes an der Hülse 3 bildet. Die Passflächen 8 und 9 sind leicht konisch ausgeführt, wodurch sich Einsatz 2 und Hülse 3 spielfrei und reproduzierbar zusammenfügen lassen.

Eine in Fließrichtung 5 eines Spritzguss-Mediums gesehen vorne an dem Einsatz 2 angeordnete zylindrische Stufe 10 dient als Anschlag in der Hülse 3 und deren Stirnfläche 11 gleichzeitig als Abdichtung zur Spritzguss-Vorrichtung.

Eine in Fließrichtung 5 vorderseitig angeordnete konische Öffnung 4 zieht sich durch die gesamte Länge des Einsatzes 2 und leitet während des Spritzgussprozesses das Spritzguss-Medium von der Spritzguss-Vorrichtung zu einem Spritzguss-Werkzeug 1, das an die konische Öffnung 4 anschließend anordenbar ist. Die konische Öffnung 4 hat ihren größten Durchmesser im Bereich der Stirnfläche 11 der Stufe 10 und verjüngt sich in Fließrichtung 5 des Spritzguss-Mediums.

Figur 2 zeigt ein Ausführungsbeispiel einer zu dem Einsatz 2 aus Figur 1 gehörende Hülse 3 der Maschinen-Düse in zweiteiliger Ausführung. Die innere Passfläche 9 ist Teil des korrespondierenden Flächenpaares 8 und 9 und ist entsprechend konisch Ausgeführt.

An der Außenseite ist eine Sechskant-Anformung 12 zum Festziehen eines Gewindes 13 (nicht graphisch dargestellt) in der Spritzguss-Vorrichtung vorgesehen. Beim Anziehen des Gewindes 13 wird die Stufe 10 gegen die Spritzguss-Vorrichtung gespannt. Auch die beiden korrespondierenden Flächen 8 und 9 werden spielfrei gegeneinander verspannt und hindern den Einsatz 2 am Durchrutschen durch die Hülse 3. Die Länge des Einsatzes 2 ist dabei so gewählt, dass ein Teil des Einsatzes 2 aus der Hülse 3 an der Seite, welche zum Spritzguss-Werkzeug 1 gerichtet ist, heraussteht, um eine Anbindung des Einsatzes 2 an die Angussbuchse 7 des Spritzguss-Werkzeugs 1 zu ermöglichen.

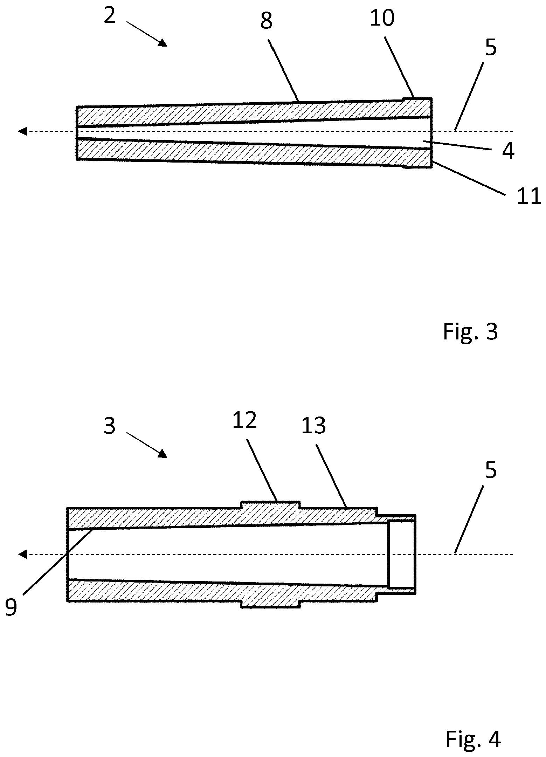

Figur 3 zeigt den Einsatz 2 aus Figur 1 in einer Schnittdarstellung. Hier ist deutlich die konische Geometrie der äußeren Passfläche 8 und der sich verjüngende Verlauf der konischen Öffnung 4 in Fließrichtung 5 des Spritzguss-Mediums zu erkennen.

Bei der konischen Ausführungsform der äußeren Passfläche 8 kommt die Schulter der Stufe 10 nicht zum Anschlag mit der Hülse 3, da sonst eine Doppelpassung vorliegen würde. Vielmehr behält sie einen gewissen Abstand zur entsprechenden Anlagefläche in der Hülse 3, damit die innere und äußere Passfläche 8 und 9 in Eingriff kommen können.

Figur 4 zeigt die Hülse 3 aus Figur 2 in einer Schnittdarstellung. Auch hier ist der konische Verlauf der inneren Passfläche 9 ersichtlich.

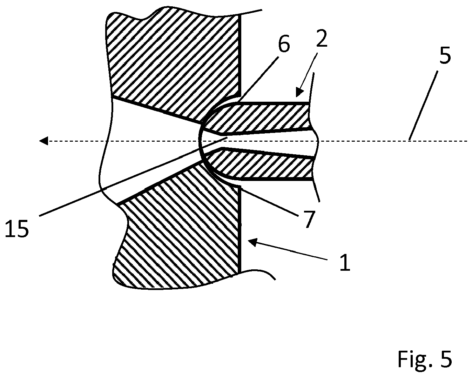

Figur 5 zeigt eine vergrößerte Darstellung einer Spitze der Maschinen-Düse im Eingriff mit der Angussbuchse 7 des Spritzguss-Werkzeugs 1. Gut zu erkennen sind die beiden aufeinander abgestimmten Radien des Einsatzes 2 und der Angussbuchse 7. Der Radius des Einsatzes 2 ist kleiner als der der Angussbuchse 7 gewählt, so dass sich ein gut abdichtender Linienkontakt zwischen der Angussbuchse 7 und dem Einsatz 2 ergibt.

Die engste Stelle der Öffnung 14 des Einsatzes 2 ist gut zu erkennen. Der in Fließrichtung 5 des Spritzguss-Mediums engsten Stelle der Öffnung 14 vorgelagert verjüngt sich die konische Öffnung 4, um sich danach wieder aufzuweiten und auf den Öffnungsdurchmesser der Angussbuchse 7 anzupassen. Durch diese dem Ende des Einsatzes vorgelagerte engste Stelle der Öffnung 14 kann sichergestellt werden, dass der Fluss des Spritzguss-Mediums gleichmäßig und ohne Unterbrechung in das Spritzguss-Werkzeug 1 eingeleitet wird. Die engste Stelle der Öffnung 14 liegt dazu im hinteren Teil des Einsatzes 2 und die sich zuvor verjüngende konische Öffnung 4 bildet den größten Teil der gesamten Öffnung im Einsatz 2.

### Bezugszeichenliste:

1 Spritzguss-Werkzeug
2 Einsatz
3 Hülse
4 konische Öffnung
5 Fließrichtung
6 Anschlussradius
7 Angussbuchse
8 Äußere Passfläche
9 Innere Passfläche
10 Stufe
11 Stirnfläche
12 Sechskant-Anformung
13 Gewinde
14 Engste Stelle der Öffnung

## Patentansprüche

1. Maschinen-Düse für eine Spritzguss-Vorrichtung, wobei die Maschinen-Düse dazu eingerichtet ist, ein Spritzguss-Medium von der Spritzguss-Vorrichtung in ein Spritzguss-Werkzeug (1) zu leiten,
**dadurch gekennzeichnet, dass**
die Maschinen-Düse mehrteilig ausgeführt ist und einen Einsatz (2) sowie eine Hülse (3) umfasst, wobei der Einsatz das Spritzguss-Medium leitet, während die Hülse den Einsatz an der Spritzguss-Vorrichtung fixiert.

2. Maschinen-Düse gemäß Patentanspruch 1,
**dadurch gekennzeichnet, dass**
der Einsatz (2) so eingerichtet ist, dass im Bereich der Maschinen-Düse nur der Einsatz (2) Kontakt zum Spritzguss-Medium erfährt.

3. Maschinen-Düse gemäß einem der vorhergehenden Patentansprüche,
**dadurch gekennzeichnet, dass**
die Hülse (3) den Einsatz (2) durch eine lösbare Verbindung an der Spritzguss-Vorrichtung fixiert, vorzugsweise, dass die lösbare Verbindung als Schraubverbindung ausgebildet ist.

4. Maschinen-Düse gemäß einem der vorhergehenden Patentansprüche,
**dadurch gekennzeichnet, dass**
die Maschinen-Düse beheizbar ausgeführt ist, vorzugsweise, dass die Maschinen-Düse Heizelemente aufweist.

5. Maschinen-Düse gemäß einem der vorhergehenden Patentansprüche,
**dadurch gekennzeichnet, dass**
der Einsatz (2) wenigstens teilweise aus Material mit einer Wärmeleitfähigkeit von über 50 W/mK besteht, vorzugsweise mit einer Wärmeleitfähigkeit von über 150 W/mK.

6. Maschinen-Düse gemäß einem der vorhergehenden Patentansprüche,
**dadurch gekennzeichnet, dass**
der Einsatz (2) wenigstens teilweise aus einer Legierung aus Wolfram-Kupfer oder Beryllium-Kupfer oder Chrom-Molybdän-Stahl besteht.

7. Maschinen-Düse gemäß einem der vorhergehenden Patentansprüche,
**dadurch gekennzeichnet, dass**
der Einsatz (2) eine Beschichtung aufweist, vorzugsweise eine Beschichtung aus Titan-Zirkonium-Molybdän.

8. Maschinen-Düse gemäß einem der vorhergehenden Patentansprüche,
**dadurch gekennzeichnet, dass**
der Einsatz (2) eine mehrstufige, im Wesentlichen zylindrische Form aufweist.

9. Maschinen-Düse gemäß einem der vorhergehenden Patentansprüche,
**dadurch gekennzeichnet, dass**
der Einsatz (2) zur Führung des Spritzguss-Mediums eine Öffnung (4) aufweist, welche sich in Richtung einer Fließrichtung (5) des Spritzguss-Mediums verjüngt, vorzugsweise dass die Öffnung (4) nach der Verjüngung auf eine engste Stelle wieder erweitert ist.

10. Maschinen-Düse gemäß einem der vorhergehenden Patentansprüche,
**dadurch gekennzeichnet, dass**
der Einsatz (2) an der zum Spritzguss-Werkzeug (1) gerichteten Fläche einen Anschlussradius (6) aufweist, welcher 0,5 bis 1,0 mm kleiner ist als eine korrespondierende Angussbuchse (7) des Spritzguss-Werkzeugs (1).

11. Maschinen-Düse gemäß einem der vorhergehenden Patentansprüche,
**dadurch gekennzeichnet, dass**
der Einsatz (2) an seinem zum Spritzguss-Werkzeug (1) gerichteten Ende standardisierte Düsenanschlussmaße nach Euromap-2 Standard aufweist.

12. Maschinen-Düse gemäß einem der vorhergehenden Patentansprüche,
**dadurch gekennzeichnet, dass**
der Einsatz (2) so eingerichtet ist, dass der Einsatz (2) an einer Angussbuchse (6) des Spritzguss-Werkzeugs (1) ausgerichtet wird.

13. Maschinen-Düse gemäß einem der vorhergehenden Patentansprüche,
**dadurch gekennzeichnet, dass**
wenigstens ein korrespondierendes Flächenpaar aus einer Außenfläche des Einsatzes (2) und einer Innenseite der Hülse (3) eine Passung zur Minimierung von Spiel bilden, vorzugsweise dass das korrespondierende Flächenpaar konisch ausgeformt ist.

14. Maschinen-Düse gemäß einem der vorhergehenden Patentansprüche,
**dadurch gekennzeichnet, dass**
die Hülse (3) wenigstens teilweise aus einem Stahl besteht, vorzugsweise einem Warmarbeitsstahl.

15. Spritzguss-Vorrichtung mit einer Maschinen-Düse, wobei die Maschinen-Düse dazu eingerichtet ist, ein Spritzguss-Medium von der Spritzguss-Vorrichtung in ein Spritzguss-Werkzeug (1) zu leiten,
**dadurch gekennzeichnet, dass**
die Maschinen-Düse mehrteilig ausgeführt ist und einen Einsatz (2) sowie eine Hülse (3) umfasst, wobei der Einsatz das Spritzguss-Medium leitet, während die Hülse den Einsatz an der Spritzguss-Vorrichtung fixiert.
